# EUROPEAN PATENT APPLICATION

(11) **EP 3 086 273 A1**
(43) Date of publication of application: **26.10.2016**
(21) Application number: 15164182.6
(22) Date of filing: 20.04.2015
(51) Int. Cl.: G06Q 30/02

(54) **A METHOD FOR DATA COMMUNICATION BETWEEN A DATA PROCESSING UNIT AND AN END DEVICE AS WELL AS A SYSTEM FOR DATA COMMUNICATION**

(71) Applicant: Spoods GmbH, 10119 Berlin (DE)
(72) Inventor: Binne, Carsten, 22339 Hamburg (DE); Gienke, Karl-Heinz, 22297 Hamburg (DE); Lohr, Thomas, 10119 Berlin (DE)
(74) Representative: Prinz & Partner mbB

(57) **Abstract**

A method for data communication between a data processing unit (12) and an end device (20) to be used by a user is provided, which method comprises an analyzing step according to which a content to be displayed on a display (22) of the end device (20) is analyzed and wherein the content to be displayed is chosen by the user, previously. Further, a data set (16), in particular a video data set, stored in a storage (14) of said data processing unit (12) is chosen according to the result of the analyzing step. The data set (16) is transferred to the end device (20) which data content is displayed on the display (22) of the end device (20). Further, a system (10) is provided.

## Description

### FIELD OF THE INVENTION

The invention relates to a method for data communication between a data processing unit, for instance a server, and an end device such as a personal computer, a smartphone, a tablet, a notebook or any other suitable device. Further, the invention relates to a system for data communication comprising a data processing unit and an end device.

### BACKGROUND

Nowadays, data communication is a very important topic as the time spent using digital media increases significantly.

Accordingly, companies and firms are interested in addressing their information, e.g., adverts to users using digital media. In former days, firms and companies could address their information to the end-users easily while using printed information in newspapers for example. The information of the companies could be designed such that they match with the content presented in the printed newspaper as this content was permanent.

In contrast, digital content is fast moving since a content of a webpage, for instance a news webpage, is updated within seconds. This can result in an improper relationship between the content of an updated webpage and information provided by a company, in particular an advert. Such an improper relationship can also be caused by the use of so called "cookies", which - irrespective of the content of the webpage - lead to displaying adverts of those items the user has searched for earlier. A user viewing such a webpage could feel displeased in particular due to the improper content relationship presented by the advert and the content of the webpage.

Hence, one object of the present invention is to provide a method for data communication which enables a better provision of information.

### SUMMARY

The object of the invention is solved by the invention as presented in the independent claims. Preferred embodiments are provided in the dependent claims as well as in the description and figures.

According to a first embodiment of the invention a method for data communication between a data processing unit and an end device to be used by a user is provided, which method comprises a transferring step wherein a data set is transferred to an end device which content is displayed on a display of the end device. Particularly, data communication refers to digital communication being used in the internet.

A data processing unit can be a server whereas an end device can be any device which is used by an end-user, for instance a personal computer, a smart phone, a tablet, a notebook or any other suitable device having access to a network, e.g. the internet.

Further, the inventive method comprises an analyzing step, wherein a content to be displayed (in the following called *"content A"*) is analyzed by the data processing unit and upon analyzing of content A, a data set is selected which matches with the content A and is then transferred to and displayed on the end device of the user. By aligning the content of the data set with the content A, preferably a content of a webpage, more preferably an online article, the marketing effect of the data set may be increased.

The content A has been actively chosen by the user of the end device, previously. The analyzing step of content A can preferably be performed before the data set is transferred to the end device.

Depending on the result of the analysis of content A, a data set is selected, in particular an advertising data set comprising a video data set, which is stored in a storage medium of the data processing unit. A data set comprising moving pictures (in the following called *"video content of data set"* or *"video data set"* is preferably selected to be comprised in the data set, as a content having moving pictures is generally preferably chosen by a user when using websites and in addition the video content may provide more (emotional) information to the user. In other words, the marketing effect of the data set, preferably advertising data set can be increased by using video contents. The content of the data set to be selected preferably stands in direct relationship to the content A chosen by the user, e.g., content A relates to an article about middle class cars and the data set exhibits an advert preferably comprising a video data set on middle class cars. The data set is provided by the data processing unit and after selection is transferred to the end device, so that content A and the content of the data set are at least partially displayed by the end device.

According to an aspect of the invention, the content A chosen by the user can be displayed in a first region of a display of the end device, wherein the content of the data set transferred may be displayed in a second region. Both regions are displayed by the display of the end device such that the content A and the data content are displayed (at least in part), simultaneously. The second region can be embedded in the first region (so called *"content area"* of a webpage) such that the user of the end device may hardly recognize a difference in the contents due to a matching visual appearance of both regions. In other words, due to the alignment of the content A and then content of the data set the user may also be of the opinion that both contents are offered by the same party. For instance, the regions can be frames of a webpage being displayed when a particular homepage is called. Alternatively, the second region can be positioned above, below, left or right with respect to the first region. Additionally or alternatively, the second region is positioned in the so called *"inventory area"* of a webpage, which is located most often right with respect to the so called content area.

Particularly, several data sets can be stored in the storage medium of the data processing unit wherein each data set can be tagged by a one or more meta tags, previously. The one or more meta tags can comprise several words, e.g. one, two, three, four, five, six, seven, eight or more key words, for labeling the data content of the appropriate data set. The tags may be helpful to characterize the content of the data set, in particular when several data sets are stored in the storage medium.

The content A can be analyzed in the analyzing step such that the one or more meta tags of each data set stored in the storage medium are searched in the content A or - if applicable - in the meta level characterizing the content A. In addition or alternatively, the meta tags may comprise key words, which may not be comprised in the content A, preferably. This ensures that a content A can even better be aligned with the data set. As an example, in case the video of the advertising data set comprises a video content of a middle class car featuring the singer Robbie Williams, the meta tags could comprise as key words characterizing the content of the data set: "automotive, middle class cars, Robbie Williams", etc., and as key word, which should not be comprised in the content A or the meta level thereof: "music" in order to avoid that the data set is displayed together with a music content instead of a content concerning middle class cars.

Depending on the result of the analyzing step, the data set which matches best to the content A is selected to be transferred to the end device, preferably. In case the analyzing step provides the result that no data set stored in the storage medium matches with the content A, then no data set is transferred to the end user. This ensures that the content of the data set displayed matches with the content A chosen to be displayed by the user. Thus, it appears to the user that the content of the data set and the content A belong together and the user is more inclined to view the content of the data set. In other words, the marketing effect of the advert may be increased by aligning the content of the data set, preferably an advert comprising a video content, and the content A, preferably a content of a webpage, more preferably an online article.

According to another aspect of the invention, one, two, three, four, five, six or more selectable elements can be displayed as part of the data set in a sub-region of the second region, wherein the one or more selectable elements can be selected by the user and upon selection provide a link to at least one further data processing unit. The selectable element can be a button or a hyperlink being displayed on a webpage, in particular a deep link. For instance, the sub-region can be a sub-frame of the second region when the second region is a frame of a webpage. The selectable element can provide a hyperlink to another webpage wherein the data of that webpage is stored on another data processing unit, which does not comprise the content A displayed in the first region and/or the data set which content is displayed in the second region. Alternatively the data of the other webpage may be stored on the data processing unit which also comprises the storage medium with the data sets.

Further, the one or more selectable elements and/or the linking of the selectable elements can be edited by the data processing unit in accordance to the transferred data set. Accordingly, the one or more selectable elements and/or the linking is adjusted to the content of the data set and content A respectively, as the content of the data set matches with the content A in the first region. In other words, it appears to the user of the end device that the one or more selectable elements are part of the content displayed in the first region.

According to a further preferred aspect of the invention, the data processing unit is configured to counting the hits on the data content of the data set transferred, *e.g.,* the hits on the video content of the data set and/or the one or more selectable elements. The number of hits in total or with respect to the video content and the selectable elements separately can be used for calculating the charge, which has to be paid by the party using the data set, i.e., in general the advertising party and/or the owner or operator of the webpage to which the hyperlink refers. The charge may also depend on the hyper- or deep link which has been selected. In other words, the charge may differ on the "quality" of the hyper- and/or deep links. The more general the hyper- and/or deep links are, the less charge per hit may fall due. For example, a hyper- and/or deep link to the general home page of the advertising party may be charged less than a hyper- and/or deep link to a webpage providing direct contact to the advertising party.

According to another aspect of the invention, the data processing unit can additionally or alternatively record the data retrieving time, in particular the relation of the data retrieving time and the duration of the data content, i.e. of the video content of the transferred data set. This data retrieving time and/or the relation can also be used for calculating the charge, preferably.

Particularly, the data content of the data set, preferably including e.g., a video content and one or more, preferably, three, four, five, six, seven, eight, nine, ten, eleven, twelve or more selectable elements, can preferably be displayed such that the content thereof is embedded within the content A. Hence, the user of the end device believes that the data content of the data set is part of the content A, which he has actively chosen previously. Such a recognition may also have a positive effect on the use of the content of the data set, in particular, e.g., of the video content and/or the one or more selectable elements. In other words, the marketing effect may also be increased by this arrangement of the content of the data set within the content A.

The features and preferred aspects disclosed with respect to the first embodiment of the invention may be combined with each other in any possible way, provided the combination is reasonable for a person skilled in the art.

According to a second embodiment, the invention also provides a system for data communication comprising a data processing unit and an end device to be used by a user. The features and preferred aspects of the first embodiment are also applicable with respect to the second embodiment of the invention.

The data processing unit thus can comprise a storage medium for at least one data set, in particular comprising preferably a video data set. The data processing unit can be configured to transferring the data set to the end device. Accordingly, the data processing unit and the end device each have an interface for communicating with each other.

The end device can have a display for displaying information and the end device is preferably configured such that content A is displayed in a first region, which content is actively chosen by the user. Moreover, the end device is preferably configured such that the data content of the data set transferred to the end device can be displayed in a second region. Hence, the content A which the user wants to view and the content of the data set are displayed, simultaneously. Due to the alignment of both contents the user preferably does not recognize that the content of the data set is not part of the content A. This in turn may increase the use of the content of the data set.

Further, the data processing unit is preferably configured to analyzing the content A in the first region such that a data set, which content is to be displayed in the second region, is selected from the storage medium depending of the result of the analysis. Hence, it is ensured that the data content of the data set displayed simultaneously matches with the content A which has been chosen by the user. Accordingly, the user of the end device believes that the whole information displayed on the end device comprising content A and the content of the data set belongs together.

According to a further aspect of the invention, several data sets can be stored in the storage medium, wherein each data set can be tagged by one or more meta tags, previously. This simplifies the organization of the data sets in the storage medium. Preferred aspects of the meta tags and the respective key words applicable disclosed with respect to the first embodiment of the present invention are also applicable with respect to the second embodiment of the invention.

Further, the end device can be configured to displaying one, two, three, six, seven, eight, nine, ten, eleven, twelve or more selectable elements as part of the data set in a sub-region of the second region. For instance, the sub-region can be a sub-frame of the second region when the second region is a frame of a webpage. The selectable elements can be configured in form of a button or a hyperlink which can be selected by the user of the end device, for instance a deep link. Preferred aspects of the one or more selectable elements disclosed with respect to the first embodiment of the present invention are also applicable with respect to the second embodiment of the invention.

According to another aspect of the invention, the one or more selectable elements can be linked to at least one further data processing unit. The other data processing unit can be part of the inventive system. The end device can be configured to displaying information stored in the further data processing unit when one of the one or more selectable elements are selected by the user. This information can be provided in form of another webpage, for instance of the company or the firm which data content is transferred to the end device, e.g. the advertizing party. Preferred aspects of the display of information when one of the selectable elements is selected disclosed with respect to the first embodiment of the present invention are also applicable with respect to the second embodiment of the invention.

The data processing unit can be configured to comprising a capturing unit which counts the hits on the data content of the data set transferred, in particular, e.g., the video content and/or the one or more selectable elements. The number of hits in total or with respect to the video content and the selectable elements separately can be used for calculating the charge which has to be paid by the advertising party, i.e., in general the advertising party and/or owner or operator of the webpage to which the hyperlink refers. The charge may also depend on the hyper- or deep link which has been selected. In other words, the charge may differ on the "quality" of the hyper- and/or deep links. The more general the hyper- and/or deep links are, the less charge per hit may fall due. For example, a hyper- and/or deep link to the general home page of the advertising party may be charged less than a hyper- and/or deep link to a webpage providing direct contact to the advertising party.

Further, the data processing unit can be configured to additionally or alternatively comprising a time recording unit which records the data retrieving time when the data content is viewed by the user, in particular the relation of the data retrieving time and the duration of the data content. This data retrieving time and/or the relation can also be used for calculating the charge, preferably. Preferred aspects of the data processing unit disclosed with respect to the first embodiment of the present invention are also applicable with respect to the second embodiment of the invention.

The capturing unit and the time recording unit can be configured for use in calculating the charge which has to be paid by the advertising party of the data set, i.e., the advertising party and/or owner or provider of the content of the data set to be displayed or the information to which the selectable element refer. Preferred aspects of charging the advertising party, which are disclosed with respect to the first embodiment of the present invention are also applicable with respect to the second embodiment of the invention.

The features and preferred aspects disclosed with respect to the second embodiment of the invention may be combined with each other in any possible way, provided the combination is reasonable for a person skilled in the art.

According to a third embodiment, the invention provides a method for calculating charges to be paid by an advertising party for providing a digital content of a data set (16) on an end device (20), wherein the data set (16) preferably comprises a video content and one, two, three, four, five, six, seven, eight, nine, ten, eleven, twelve or more selectable elements (34), which are preferably displayed within a content A of a webpage, wherein the charges are calculated depending on the number of hits on the data content of the data set (16) in total or depending on the hits of the separate items of video content and selectable elements (34) and/or the data retrieving time of the video data content of the data set and/or the relation of the video data retrieving time with respect to the duration of the video data content of the data set (16), wherein the content of the data set (16) corresponds to the a data set (16), which has been transferred to the end device, previously. Preferably the method of the third embodiment is used together with the inventive method for data communication and/or the inventive system as described before. Preferred aspects of features of the inventive method for calculating charges to be paid are already disclosed with respect to the first and second embodiment of the invention. By using this inventive method for calculating the charges, it is enabled that the advertising party (and/or owner or operator of the deep links) charged does not pay for widespread content displacement, wherein the content of the data set (advertisement) is displayed in any web content A, which does not match with the content of the data set. According to a preferred aspect the charges depend on the quality of the content of the data set selected by the user. In case the user selects a video content, the charge may depend on the retrieving time, preferably in relation to the total duration of the video content. In other words, the longer the user watches the video, the higher the charges. In case the user selects one or more selectable elements, the charges may preferably depend on the quality of the selectable elements. In other words, the more general links are provided by the selectable elements, the lower the charges. In turn, the more specific content, in particular direct contact to the advertising party and/or the owner or operator of the webpage of the deep links, is selected by the user, the higher the charges. Accordingly, the advertising party is charged depending on the actual use of the content information of the data set by the user. Thus, the inventive method provides the benefit to the advertising party that the charges correlate with the actual use of the advert by the user.

The features and preferred aspects disclosed with respect to the third embodiment of the invention may be combined with each other in any possible way, provided the combination is reasonable for a person skilled in the art.

### BRIEF DESCRIPTION OF DRAWINGS

Further features and advantages of the invention will become apparent from the following description and from the accompanying drawings to which reference is made. In the drawings:
- Figure 1 shows a schematic overview of the system according to the invention, and
- Figure 2 shows a flow diagram representing the method according to the invention.

### TABLE OF REFERENCE NUMBERALS

The reference numerals used in the present application are the following:
- 10: system
- 12: data processing unit
- 14: storage medium
- 16: data set
- 18: interface
- 20: end device
- 22: display
- 24: device interface
- 26: second data processing unit
- 28: first region
- 30: second region
- 32: sub region of second region
- 34: one or more selectable elements
- 36: capturing unit
- 38: time recording unit

### DETAILED DESCRIPTION OF EXAMPLE EMBODIMENT

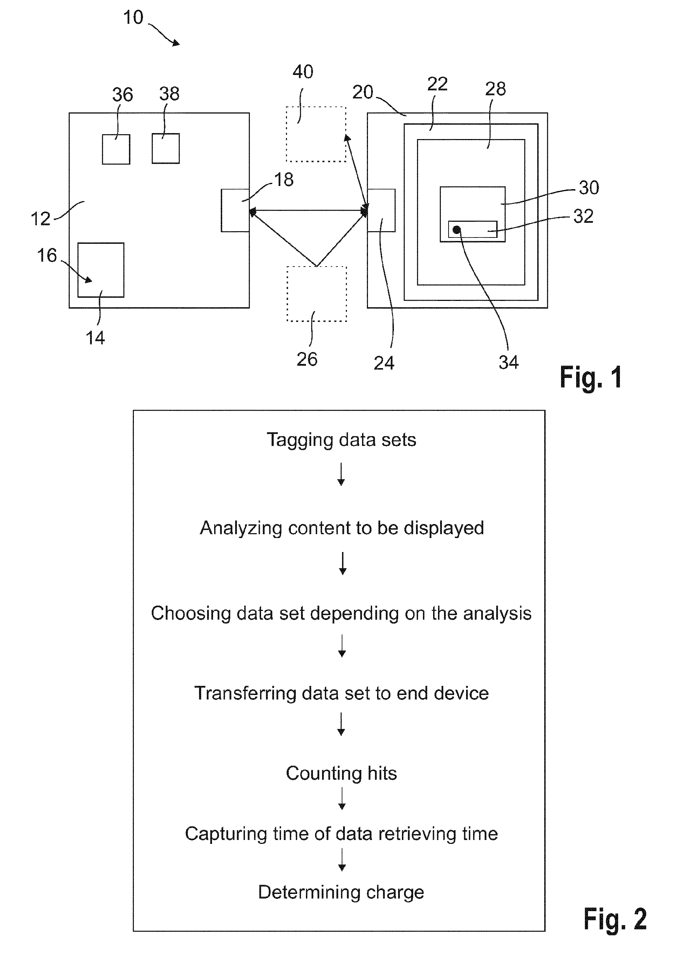

Figure 1 shows a schematic overview of a system 10 which comprises a data processing unit 12 such as a server. The data processing unit 12 has a storage medium 14 on which data sets 16 are deposited, in particular comprising video data sets and one or more selectable elements 34.

Further, the data processing unit 12 has at least one unit interface 18 for communication with an end device 20 such as a personal computer, a smart phone, a tablet, a notebook or any other suitable device. In general, the end device 20 can be used by an end-user.

The end device 20 has a display 22 for displaying information. In addition, the end device 20 has at least one device interface 24 for communication with the unit interface 18 of the data processing unit 12. The device interface 24 can also be used for communication with other data processing units as will be explained later.

Hence, the data processing unit 12 and the end device 20 can communicate with each other via the unit interface 18 and the device interface 24. For instance, data sets can be transferred via the interfaces 18, 24 from the data processing unit 12 to the end device 20 to be displayed on the display 22.

This communication can be established directly or via an intersystem, for example a second data processing unit 26. The second data processing unit 26 is shown by dashed lines as the second data processing unit 26 is not necessary part of the system 10 as will be explained later.

The end device 20 is set to display information wherein at least two regions are established, a first region 28 and a second region 30. The first region 28 can display information which has actively chosen by the user of the end device 20 to be displayed, previously. The second region 30 is used for displaying the data content of the data set, preferably the video content, which has been transferred to the end device 20, previously.

Further, the end device 20 can be configured to having a sub-region 32 being part of the second region 30. The sub-region 32 can be used for displaying the one or more selectable elements 34 wherein the selectable element 34 may be configured in form of a button with a linking which can be hit or a hyperlink. When the user selects, particularly clicks, on the selectable element 34, information of the data corresponding to the linking or the hyperlink is displayed on the display 22, in particular either in part or in the whole display 22.

The second region 30 including the sub-region 32 can be located in the content area of a webpage and/or in the inventory area of a webpage. In case the second region 30 including the sub-region 32 is located in the content area of a webpage, then the marketing effect may be increased as due to the matching content of content A and the data set 16 the user may be of the opinion that the data set 16 is part of the content A.

Additionally, the data processing unit 12 can comprise a capturing unit 36 which counts the hits on the data content displayed in the second region 30 including on the selectable elements 34. A time recording unit 38 can be provided which is part of the data processing unit 12 and records the data retrieving time of the data content, preferably video content displayed in the second region 30. In particular, the time recording unit 38 calculates the relation of the data retrieving time and the duration of the data content, preferably of a video content. The capturing unit 36 as well as the time recording unit 38 can be configured for use in calculating charges for displaying the content of the data set, i.e. the advert.

An embodiment of the system 10 according to the invention is described in accordance with the method which is schematically shown by a flow diagram in Figure 2. Accordingly, it will be described how a data set is transferred from the data processing unit 12 to the end device 20 and why this particular data set is chosen. Further, it will be described how charges can be calculated.

The preferred embodiment is related to a webpage and the internet in general. However, other suitable data communication systems can be used alternatively.

The user accesses a webpage which data can be stored on the second data processing unit 26. The second data processing unit 26 may be called a web data processing unit which corresponds to the webpage being called by the user. The web data processing unit may be different to the data processing unit 12 containing the data sets 16.

In general, the webpage visited by the user is established such that it comprises at least two regions 28, 30 which may, e.g., be frames of the webpage wherein the first region 28 is used for displaying the content A of the webpage.

In a first step, the content A to be displayed on the display 22 of the end device 20, in particular in the first region 30, is analyzed by the data processing unit 12. The webpage may be a news webpage. Hence, the content to be displayed comprises for instance news about a specific topic.

The analysis comprises a sub-step wherein the content A in full text or the meta level thereof is scanned for key words which are also part of a text field (meta tag) used for tagging the several data sets 16 being stored in the storage medium 14 of the data processing unit 12. The data sets 16 have been tagged before, in particular manually by an operator to characterize the content of the data set. The meta tags may also comprise terms, which shall not be comprised in the content A.

In a second step, each data set 16 stored in the storage medium 14 is compared with the content A to be displayed in order to determine which data set 16 of all data sets 16 stored matches best with the content A to be displayed. Therefore, the meta tags (key words) of the text fields used to characterize the data set may be evaluated, statistically. According to a preferred embodiment the best matching data set 16 is selected in a third step by the data processing unit 12 to be transferred to the end device 20.

The communication between the data processing unit 12 and the end device 20 may be established directly via the interfaces 18, 24 or indirectly via the second data processing unit 26 which may contain the data corresponding to the content of the webpage.

Further, the end device 20 is configured to displaying the content A and the data content of the data set 16 transferred to the end device 20. The content A and the data content are part of the information displayed by the end device 20. Therefore, the end device 20 has at least two regions 28, 30 wherein both regions 28, 30 may be configured in form of frames of the webpage. The regions 28, 30 can be established such that they have a common visual appearance. Accordingly, the user would not recognize whether one part of the information, in particular the data content of the data set 16, belongs to the content A or not. The data content of the data set 16, in particular the video data content, is preferably embedded within the layout of the content A such that the user becomes the feeling that the video data content and the selectable elements 34 are part of the content A, which he has selected previously to be displayed.

The second region 30 which displays the data content of the video may further comprise the sub-region 32 for displaying the one or more selectable elements 34, which may configured in form of a hyperlink and/or a button with a linking. The button can have the form of an arrow or any other suitable design.

The selectable elements 34 can have a linking to a third data processing unit 40 which may belong to the advertising party, e.g., the owner or operator of the data content displayed in the second region 30. Alternatively, the linking of the selectable element 34 may refer to the data processing unit 12 which comprises the data sets 16 which content is displayed in the first region 30. Alternatively, the linking of the selectable element 34 can refer to the second data processing unit 26.

The capturing unit 36 and/or the time recording unit 38 are used for determining the charges which have to be paid by the owner of the data content or the company to which the data content refers to. The charges can be calculated by the amount of hits on the data content or the selectable element 34, the data retrieving time and/or the relation of the data retrieving time compared to the duration of the data content. Accordingly, a very accurate cost calculation can be provided.

Further, it has turned out that video data content stimulates the users motivation more than non-moving-images in order to hit the data content or any further selectable element for more information. Hence, the data sets 16 are preferably video data sets.

In general, the second region 30 can be positioned adjacent to the first region 28. Alternatively, the second region 30 can be embedded in the first region 28. The first region 28 can comprise several sub-regions, in particular frames.

The sub-region 32 can be positioned in a left, right, top or lower part of the second region 30. In order to provide more options to the user, the sub-region 32 can comprise one, two, three, four, five, six, seven, eight, nine, ten, eleven, twelve or more selectable elements 34, preferably, three, four, five, six, seven, eight, nine, ten, eleven or twelve, more preferably, four, six, or eight.

Further, the second region 30 may have an implemented web player for playing the data content of the data set being transferred to the end device in advance, for instance a PD2-player.

## Claims

1. Method for data communication between a data processing unit (12) and an end device (10) to be used by a user comprising the following steps:
a) Analyzing a content to be displayed on a display (22) ("*content A*") of the end device (20), wherein the content A is chosen by the user, previously;
b) Selecting a data set (16), in particular comprising a video data set, stored in a storage medium (14) of the data processing unit (12) according to the result of step a);
c) Transferring the content A and the selected data set (14) of step b) to the end device (20) so that content A and the data content of the data set (14) are displayed at least partially on the display (22) of the end device (20).

2. Method according to claim 1, **characterized in that** the chosen content A is displayed in a first region (28) and the data content of the data set (16) is displayed in a second region (30).

3. Method according to claim 1 or 2, **characterized in that** several data sets (16) are stored in the storage medium (14) of the data processing unit (12) wherein each data set (16) is tagged by one or more meta tags.

4. Method according to claim 3, **characterized in that** the content A is analyzed in step a) such that the one or more meta tags of each data set (16) stored in the storage medium (14) are searched in the content A and wherein the data set (16) matching best to the content A is selected to be transferred in step c) to the end device (20).

5. Method according to any of the preceding claims, **characterized in that** one, two, three, four, five, six or more selectable elements (34) are displayed in a sub-region (32) of the second region (30) and the selectable elements (34) are linked to at least one further data processing unit (26, 40) wherein the one or more selectable elements (34) can be selected by the user.

6. Method according to claim 5, **characterized in that** the one or more selectable elements (34) and/or the linking of the selectable elements (34) correlate with the video content of the transferred data set (16).

7. Method according to any of the preceding claims, **characterized in that** the data processing unit (12) counts the hits on the data content of the data set (16) and/or the one or more selectable elements (34).

8. Method according to any of the preceding claims, **characterized in that** the data processing unit (14) records the data retrieving time, in particular the relation of the video data retrieving time and the duration of the video content of the data set (16) transferred to the end device (20).

9. Method according to any of the preceding claims, **characterized in that** the data content of the data set (16) is displayed such that it is embedded in the content A.

10. System (10) for data communication comprising a data processing unit (12) and an end device (20) to be used by a user wherein
a) the data processing unit (12) comprises a storage medium (14) for one, two, three or more data sets (16), in particular a video data set, and the data processing unit (14) is configured to transferring the data set (16) to the end device (20), wherein
b) the end device (20) has a display (22) for displaying information and the end device (20) is configured such that the content A is displayed in a first region (28), which content A is actively chosen by the user of the end device (20), previously, and wherein the end device (20) is further configured such that the data content of the data set (16) transferred to the end device (20) is displayed in a second region (30), and wherein
c) the data processing unit (14) is further configured to analyzing the content A in the first region (28) such that the data set (16) to be transferred to the end device (20) is selected from the storage medium (14) depending on the result of the analysis.

11. System (10) according to claim 10, **characterized in that** one or more data sets (16) are stored in the storage medium (14), wherein each data set (16) is tagged by one or more meta tags.

12. System (10) according to claim 10 or 11, **characterized in that** the end device (20) is further configured to displaying one, two, three, four, five, six or more selectable elements (34) as part of the data set (16) in a sub-region (32) of the second region (30).

13. System (10) according to claim 12, **characterized in that** the one or more selectable elements (34) are linked to at least one further data processing unit (26, 40) and wherein the end device (20) is configured to displaying information stored in the further data processing unit (26, 40) when one of the selectable elements (34) is selected by the user.

14. System (10) according to any of claims 10 to 13, **characterized in that** the data processing unit (12) comprises a capturing unit (26) which counts the hits on the data content of the data set (16) and/or the one or more selectable elements (34) and/or comprises a time recording unit (38) which records the data retrieving time when the video data content of the data set (16) is viewed by the user, in particular the relation of the video data retrieving time and the duration of the video data content of the data set (16).

15. Method for calculating charges to be paid by an advertising party for providing a digital content of a data set (16) on an end device (20), wherein the data set (16) preferably comprises a video content and one, two, three, four, five, six, seven, eight, nine, ten, eleven, twelve or more selectable elements (34), which are preferably displayed within a content A of a webpage, wherein the charges are calculated depending on the number of hits on the data content of the data set (16) in total or depending on the hits of the separate items of video content and selectable elements (34) and/or the data retrieving time of the video data content of the data set and/or the relation of the video data retrieving time with respect to the duration of the video data content of the data set (16), wherein the content of the data set (16) corresponds to the a data set (16), which has been transferred to the end device, previously.
